Europäisches Patentamt

European Patent Office

Office européen des brevets

(11) Numéro de publication: **0 373 681**
**A1**

(12) **DEMANDE DE BREVET EUROPEEN**

(21) Numéro de dépôt: **89202486.0**

(22) Date de dépôt: **03.10.89**

(30) Priorité: **02.12.88 BE 8801359**

(43) Date de publication de la demande:
**20.06.90 Bulletin 90/25**

㊴ ·Etats contractants désignés:
**DE ES FR IT NL**

(51) Int. Cl.⁵: **B60G 17/005, B60G 5/01**

(71) Demandeur: **LAG MANUFACTURING
COMPANY NAAMLOZE VENNOOTSCHAP
Kanaallaan 54
B-3690 Bree(BE)**

(72) Inventeur: **Soons, Joseph
Kozijnstraat 14
B-3690 Bree(BE)**

(74) Mandataire: **Donné, Eddy
M.F.J.Bockstael Arenbergstraat 13
B-2000 Anvers(BE)**

(54) Dispositif pour le blocage de l'essieu d'un véhicule.

(57) Dispositif pour le blocage de l'essieu d'un véhicule, caractérisé en ce que sur la partie non suspendue du véhicule (2) une protubérance ou un doigt (10) est prévu, tandis que sur la partie suspendue du véhicule (7) une crémaillère (12) pivotante est prévue avec laquelle la protubérance (10) peut coopérer, où cette crémaillère (12) est reliée avec un ressort (16) qui essaie constamment d'établir le contact avec la protubérance (10) et où des dispositifs (17) sont prévus qui commandent la position de la crémaillère (12).

Fig. 2

## Dispositif pour le blocage de l'essieu d'un véhicule.

La présente invention concerne un dispositif pour le blocage de l'essieu, respectivement des essieux, d'un véhicule, par exemple une semi-remorque, plus particulièrement les semi-remorques dites rail-route, c'est-a-dire des semi-remorques qui sont, entre autres, transportées sur des wagons de chemin de fer.

En outre, la présente invention concerne de tels dispositifs qui sont appliqués sur des semi-remorques rail-route à suspension pneumatique.

Il est connu que l'air de la suspension doit être purgé des semi-remorques rail-route à suspension pneumatique avant de pouvoir désaccoupler le véhicule tracteur.

Egalement, il est connu, que lorsque de telles semi-remorques équipées d'une suspension pneumatique sont soulevées par une grue, les essieux de roue se déplacent vers le bas, sous l'influence de leur poids propre, par rapport à la construction de la semi-remorque en soi par quoi les soufflets pneumatiques se trouvent sous vide d'air et s'affaisent ce qui a pour résultat que des plis se forment dans les soufflets.

Une autre conséquence est que, lorsque les roues du véhicule sont ensuite placées sur un support, les plis susdits, qui ont été causés par le vide d'air dans les soufflets, se maintiennent par quoi ces plis peuvent se loger entre la butée du soufflet pneumatique et le châssis du véhicule et que les soufflets peuvent être abîmés et que, par conséquent, le véhicule ne peut plus rouler.

La présente invention concerne un dispositif qui permet que chaque essieu peut individuellement, sans tenir compte de la position de cet essieu par rapport au châssis du véhicule, être bloqué afin d'exclure que cet essieu ne tombe et d'éliminer l'affaisement des soufflets pneumatiques et la formation de plis.

Le dispositif suivant l'invention permet cependant que, lors de la pose du véhicule, chaque essieu puisse indépendamment et automatiquement s'ajuster en hauteur, c'est-à-dire par rapport au châssis du véhicule, en fonction des irrégularités dans le plancher de soutien.

Le dispositif suivant l'invention consiste à cet effet en un dispositif pour le blocage de l'essieu ou des essieux d'un véhicule, charactérisé en ce que la partie suspendue du véhicule est équipée d'une protubérance ou d'un doigt, tandis qu'une crémaillère pivotante est prévue sur la partie non suspendue du véhicule avec laquelle la protubérance susdite peut coopérer, où cette crémaillère est reliée à un ressort qui essaie constamment d'établir le contact entre la crémaillère et la protubérance ou le doigt, et où des dispositifs de contrôle de la position de la crémaillère sont prévus.

Afin de mieux démontrer les caractéristques de l'invention, une réalisation préférentielle d'un dispositif suivant l'invention est décrite ci-dessous, sans caractère restrictif, avec des références aux dessins ci-inclus, dans laquelle :

la figure 1 représente un vue de côté d'une semi-remorque équipée d'un dispositif suivant l'invention ;

la figure 2 représente, à plus grande échelle, la partie indiquée par F2 dans la figure 1 ;

la figure 3 représente une vue similaire à celle de la figure 2 mais dans une position particulièrement caractéristique ;

la figure 4 représente un schéma de la commande pneumatique des soufflets pneumatiques d'une suspension de véhicule.

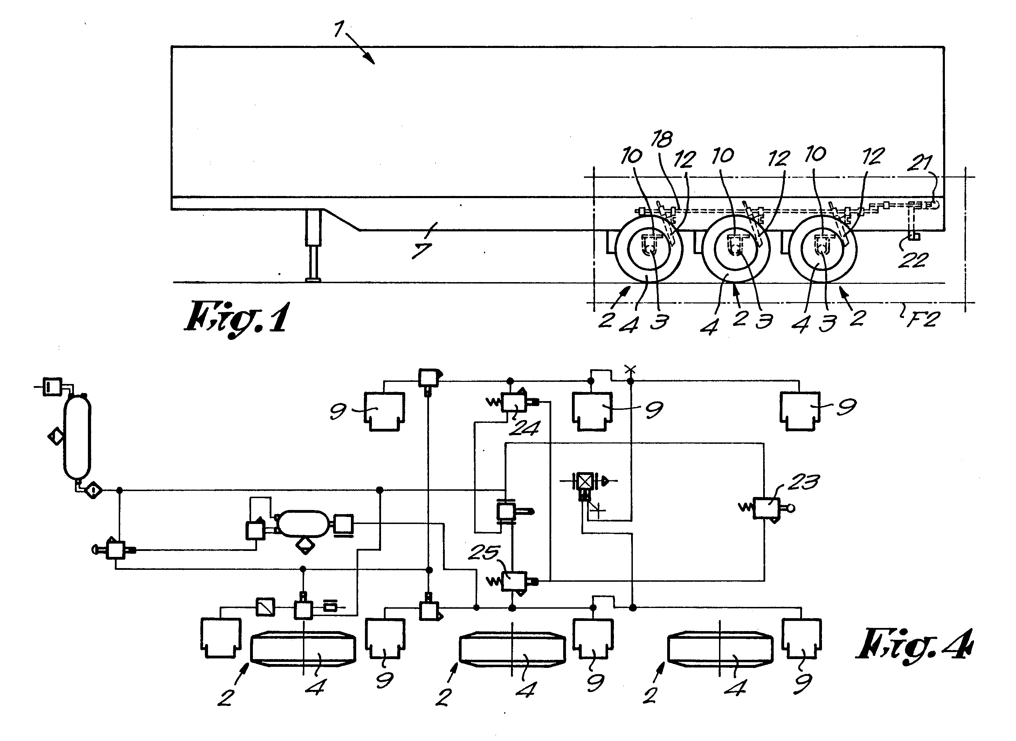

Dans la figure 1 une semi-remorque 1 est représentée qui est équipée, dans ce cas-ci, de trois essieux montés 2.

Chaque essieu monté 2 est principalement formé par un essieu 3 équipé de deux ou plusieurs roues 4 où l'essieu 3 d'un tel essieu monté 2 est soutenu par un bras 5 qui, à une extrémité et par l'entremise d'un point d'articulation 6, est fixé en berceau par rapport au châssis 7 du véhicule 1, tandis que la deuxième extrémité de ce bras 5 forme un support 8 pour un soufflet pneumatique 9 qui s'appuie contre le châssis 7 avec son autre extrémité.

Suivant la présente invention une protubérance fixe ou un doigt 10 est fixé, d'une part, à chaque essieu 3 ou à une pièce reliée à cet essieu, et une crémaillère 12, pouvant pivoter librement autour d'un pivot 11, est installée sur le châssis 7, à proximité de la protubérance 10, dont la denture est réalisée en forme trapézoïdale, de façon que le flanc inférieur 13 de chaque dent 14 est dirigé à la verticale ou presque à la verticale sur la direction longitudinale de cette crémaillère 12, tandis que le flanc supérieur 15 est placé de façon inclinée.

L'extrémité de la crémaillère 12 placée sur la deuxième face du pivot 11 est reliée au châssis 7 par l'entremise d'un ressort de traction 16 de façon que la crémaillère 12 essaie de toujours se déplacer vers la protubérance 10 sous la traction du ressort 16.

Le déplacement de cette crémaillère 12 est également déterminé par une butée 17 qui est fixée sur une barre 18 qui est installée librement dans des douilles 19 qui sont fixées directement ou indirectement sur le châssis 7.

La barre 18 est, par exemple, équipée d'un galet de roulement 20 à son extrémité libre qui peut coopérer avec une came 21 qui, dans ce cas, est fixée sur un élément pivotable 22.

Tel que représenté dans les dessins, lorsqu'une remorque, semi-remorque ou similaire est équipée de plus d'un essieu monté 2, chaque essieu de celle-ci sera équipé d'un dispositif décrit ci-dessus où dans ce cas la barre 18 est commune pour tous les essieux montés.

Tel que représenté dans les figures, l'élément 22 peut coopérer avec une soupape pneumatique 23 qui est connectée de façon appropriée avec des soupapes 24, 25 qui sont elles aussi connectées avec les soufflets pneumatiques 9.

L'opération et l'utilisation du dispositif suivant l'invention sont très simples et comme suit.

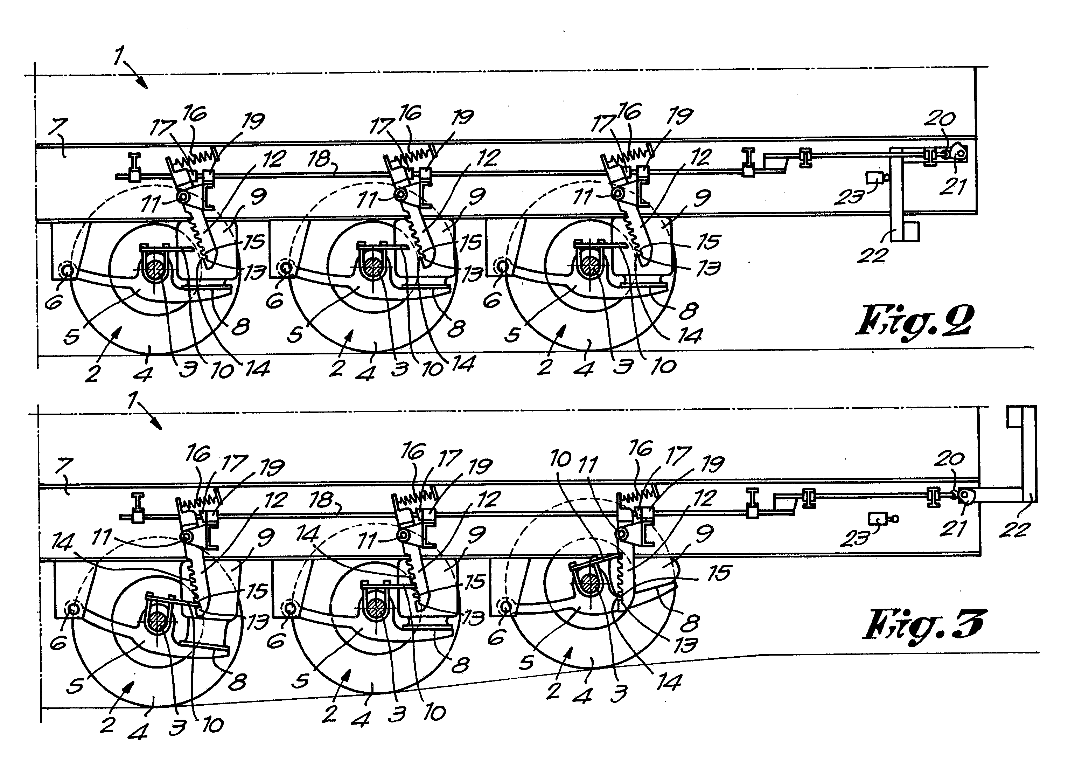

Lorsqu'un véhicule, équipé d'un dispositif suivant l'invention, se trouve normalement sur la surface routière, le dispositif susdit se trouve dans la position telle que représentée dans les figures 1 et 2, c'est-à-dire que la crémaillère, respectivement les crémaillères, 12 ne sont pas engagées par leurs protubérances 10 respectives.

Dans le cas d'une suspension pneumatique, la soupape pneumatique 25 est influencée de telle manière que l'échappement d'air hors des soufflets 9 est évité.

Lorsque, pour une raison ou pour une autre, le véhicule doit être soulevé, on fera, en premier lieu, échapper l'air des soufflets 9, ce qui se fait dans la présente réalisation par le pivotement de l'élément pivotant 22 pour libérer la soupape 23, afin que l'air puisse s'echapper par les soupapes 24 et 25.

Le pivotement de l'élément 22 cause également le pivotement de la came 21 ce qui fait que, sous l'influence du ressort 16, chaque crémaillère 12 suit sa butée 17 respective jusqu'à ce que la crémaillère s'engage avec une protubérance 10.

Il est évident qu'à ce moment-ci le véhicule peut être soulevé par un dispositif de levage approprié sans que le ou les essieux montés 2 s'abaissent, pour ainsi dire.

De cette manière on obtient que la formation de plis est totalement évitée où il suffit de, afin de replacer le véhicule en position de marche, replacer l'élément pivotant 22 dans la position représentée dans la figure 2.

En effet, la crémaillère ou les crémaillères 12 seront ainsi libérées de leur protubérance 10 respective et de l'air pourra, par l'enfoncement de la soupape 22, être réapprovisionné dans les soufflets 9.

La figure 3 démontre que le dispositif suivant l'invention fonctionne de manière tout aussi efficace lorsque, dans le cas de plusieurs essieux montés, ceux-ci se trouvent au même ou à des niveaux différents.

Egalement, lorsque le véhicule serait déplacé par un dispositif de levage, d'un plancher à niveaux différents vers un plancher nivellé, les dispositifs des différents essieux montés s'adapteront automatiquement ce qui est réalisable puisque les crémaillères sont équipées de dents 14 dont le flanc supérieur 15 est incliné.

Grâce aux crémaillères exécutées de cette façon, il est aussi possible que le dispositif maintienne la position, telle que représentée dans la figure 3, lors du chargement du véhicule puisque, dans ce cas aussi, la crémaillère 12 se déplace simplement par rapport à la protubérance 10.

Il faut signaler que la came 21 est formée de telle façon que le dispositif suivant l'invention sera tout d'abord débranché avant d'approvisionner de l'air aux soufflets 9.

Un dispositif suivant l'invention peut être installé sur n'importe quel véhicule, indépendamment de la marque, du type d'essieu, de l'entraxe des essieux montés, du nombre d'essieux montés, du type de véhicule tel qu'une semi-remorque, une remorque ou similaire.

**Revendications**

1.- Dispositif pour le blocage de 1'essieu d'un véhicule, caractérisé en ce que sur la partie suspendue du véhicule (2) une protubérance ou un doigt (10) est prévu, tandis que sur la partie non suspendue du véhicule (7) une crémaillère (12) pivotante ést prévue avec laquelle la protubérance (10) peut coopérer, ou cette crémaillère (12) est reliée avec un ressort (16) qui essaie constamment d'établir le contact avec la protubérance (10) et où des dispositifs (17) sont prévus qui commandent la position de la crémaillère (12).

2.- Dispositif suivant la revendication 1, caractérisé en ce que la protubérance (10) est fixée sur l'essieu (3) ou sur une partie reliée a l'essieu (3) par exemple un bras articulé (5) d'un essieu monté (2).

3.- Dispositif suivant la revendication 1, caractérisé en ce que le crémaillère (12) est équipée de dents (14) dont le flanc inférieur (13) se trouve à la verticale ou pratiquement à la verticale par rapport à la direction longitudinale de la crémaillère (12) tandis que le flanc supérieur (15) de chaque dent (14) est incliné par rapport à la direction longitudinale de la crémaillère.

4.- Dispositif suivant l'une des revendications 1 ou 3, caractérisé en ce que la crémaillère (12) est reliée, au-delà de son point d'articulation, avec un ressort de traction (16) dont sa deuxième extrémité est reliée avec le châssis (7) du véhicule.

5.- Dispositif suivant l'une des revendications précédentes, caractérisé en ce que les dispositifs (17) sont formés par une butée qui peut coopérer avec la crémaillère (12), à l'encontre du fonctionnement du ressort (16).

6.- Dispositif suivant la revendication 5, caractérisé en ce que la butée (17) est fixée sur une barre (18) qui est guidée de manière coulissante dans des douilles (19) fixées sur le châssis du véhicule, où des dispositifs (21) sont prévus qui commandent la barre (18).

7.- Dispositif suivant la revendication 6, caractérisé en ce que les dispositifs (21) sont formés par une came qui coopère avec l'extrémité libre de la barre (18), où cette extrémité libre est équipée d'un galet de roulement (20).

8.- Dispositif suivant l'une des revendications précédentes, caractérisé en ce que la came (21) est fixée sur un élément pivotant (22) qui, dans le cas d'une suspension pneumatique, peut coopérer avec une soupape pneumatique (23) qui permet l'échappement de l'air des soufflets pneumatiques.

9.- Dispositif suivant l'une des conclusions précédentes, caractérisé en ce que, dans le cas de plusieurs essieux montés (2), une protubérance (10), une crémaillère (12) et une butée (17) sont prévues pour chaque essieu, tandis que la barre (18) est commune.

Fig.1

Fig.4

Fig.2

Fig.3

EP 0 373 681 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 594 075 (TRAILOR)<br>* Abrégé; figures 1,2,5; page 6, ligne 20 - page 7, ligne 22 * | 1-3,5,6 | B 60 G 17/005<br>B 60 G 5/01 |
| A | | 8,9 | |
| | --- | | |
| Y | FR-A- 848 055 (O'DONNELL)<br>* Figures 1,2; page 2, ligne 100 - page 3, ligne 22 * | 1-3,5,6 | |
| | --- | | |
| A | US-A-4 171 551 (HILDEBRAND et al.)<br>* Figures 2-4 * | 7 | |
| | --- | | |
| A | FR-A- 753 164 (LAPEYRE)<br>* Figure 1; page 2, lignes 27-34 * | 1-3 | |
| | --- | | |
| A | US-A-2 096 636 (GREEN)<br>* Figures 1-4 * | 1-4 | |
| | --- | | |
| A | FR-A- 661 905 (BOLARD) | | |
| | --- | | |
| A | FR-A- 679 096 (LEGRAND) | | DOMAINES TECHNIQUES RECHERCHES (Int. Cl.5) |
| | ----- | | B 60 G<br>B 62 D |

Le présent rapport a été établi pour toutes les revendications

| Lieu de la recherche | Date d'achèvement de la recherche | Examinateur |
|---|---|---|
| LA HAYE | 15-02-1990 | TORSIUS A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

    ................................................................

& : membre de la même famille, document correspondant

EPO FORM 1503 03.82 (P0402)